# EUROPEAN PATENT SPECIFICATION

(11) **EP 4 318 764 B1**
(45) Date of publication and mention of the grant of the patent: **18.02.2026**
(21) Application number: 23767193.8
(22) Date of filing: 09.03.2023
(51) Int. Cl.: H01M 50/264, H01M 50/211, H01M 50/249, H01M 50/289, H01M 50/291

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 11.03.2022 KR 20220030772
(43) Date of publication of application: 07.02.2024
(73) Proprietor: LG Energy Solution, Ltd., Seoul 07335 (KR)
(72) Inventor: SEO, Sung-Won, Daejeon 34122 (KR); YUN, Hyeon-Ki, Daejeon 34122 (KR); JU, Eun-Ah, Daejeon 34122 (KR); TANNENBERGER, Guenter, 85123 Pobenhausen (DE); HARASZTOSI, Uwe, 74172 Neckarsulm (DE)
(74) Representative: Goddar, Heinz J.
(86) International application number: PCT/KR2023/003268
(87) International publication number: WO 2023/172092

(56) References cited:
- EP-A1- 3 883 007
- WO-A1-2014/125605
- WO-A1-2014/125605
- WO-A1-2019/031175
- CN-A- 113 346 185
- CN-U- 212 392 320
- CN-U- 212 392 320
- KR-A- 20220 003 247
- KR-A- 20220 003 247

## Description

### TECHNICAL FIELD

The present disclosure relates to a battery pack and a vehicle including the same, and more specifically, to a battery pack capable of maximizing energy density within the battery module and promoting component simplification and a vehicle including the same.

The present application claims priority to Korean Patent Application No. 10-2022-0030772 filed on March 11, 2022.

### BACKGROUND ART

As the demand for portable electronic products such as laptops, video cameras, and mobile phones has rapidly increased in recent years and the development of electric vehicles, energy storage batteries, robots, and satellites has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries and thus have advantages of free charge/discharge, very low self-discharge rate, and high energy density.

Such lithium secondary batteries mainly use a lithium-based oxide and a carbon material as a positive electrode active material and a negative electrode active material, respectively. **In** addition, lithium secondary batteries include an electrode assembly in which a positive electrode plate and a negative electrode plate coated with the positive electrode active material and the negative electrode active material, respectively are disposed with a separator interposed therebetween, and a casing, that is, a battery case, for sealing and accommodating the electrode assembly along with an electrolyte.

Meanwhile, depending on the shape of the battery case, lithium secondary batteries may be classified into a can-type secondary battery in which the electrode assembly is embedded in a metal can and a pouch-type secondary battery in which the electrode assembly is embedded in a pouch of an aluminum laminate sheet. Also, the can-type secondary battery may be further classified into a cylindrical battery and a prismatic battery, depending on the shape of the metal can.

Here, the pouch of the pouch-type secondary battery may be largely divided into a lower sheet and an upper sheet covering it. At this time, an electrode assembly formed by stacking and winding a positive electrode, a negative electrode, and a separator is accommodated in the pouch. Then, after accommodating the electrode assembly, the edges of the upper sheet and the lower sheet are sealed by thermal fusion or the like. **In** addition, the electrode tab withdrawn from each electrode may be coupled to the electrode lead, and an insulating film may be added to the electrode lead at a portion in contact with the sealing portion.

As such, the pouch-type secondary battery may have the flexibility to be configured in various forms. In addition, the pouch-type secondary battery has the advantage of being able to implement a secondary battery of the same capacity with a smaller volume and mass.

Meanwhile, a conventional pouch-type secondary battery discloses a structure in which the front, rear, left side, and rear side of a battery module including a cell stack with a plurality of battery cells being stacked are fixed to a battery pack through a separate fastening member (e.g., bolts). In the case of this structure, when the battery module is fixed to the battery pack through the fastening member, a fastening space is somewhat required.

In addition, a conventional pouch-type secondary battery should include a plurality of buffer pads on battery cells adjacent to each other and at the outermost side of the battery cell in order to prevent swelling of the battery cell.

Therefore, a conventional pouch-type secondary battery has a problem in that more battery cells may not be mounted in one battery module. Document CN 212 392 320 discloses a battery housing accommodating multiple cell modules and an adjusting member arranged between the cell modules and the housing frame.

### DISCLOSURE

### Technical Problem

The present disclosure is designed to solve the problems of the related art, and therefore the present disclosure is directed to providing a battery pack capable of maximizing energy density within the battery module and promoting component simplification and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to the present disclosure for achieving the above-described object includes a pack frame; and at least one battery module provided inside the pack frame and including a cell stack and an elastic support portion coupled to the pack frame in the front-rear direction of the cell stack to press at least one of the front and rear surfaces of the cell stack.

**In** addition, the battery module may further include a side plate portion supporting the front, rear, upper, and lower surfaces of the cell stack, wherein the elastic support portion may be disposed on at least one of the front and rear surfaces of the side plate portion.

**In** addition, the battery module may further include a module fixing portion fastened to the elastic support portion and pressing the elastic support portion in the front-rear direction of the cell stack to fix the elastic support portion to the pack frame.

**In** addition, the battery module may further include a buffer unit disposed on at least one of the front and rear surfaces of the cell stack.

**In** addition, the elastic support portion includes a support body pressing at least one of the front and rear surfaces of the cell stack; and a plurality of elastic portions formed along the left-right direction of the cell stack in the support body.

**In** addition, the plurality of elastic portions may include a bent portion coupled to a hole formed in the pack frame in the front-rear direction of the cell stack in a state of being bent in the front-rear direction of the cell stack.

**In** addition, the elastic support portion may further include a groove formed by being recessed from an upper end of the support body in a vertical direction, formed along the left-right direction of the cell stack in the support body, and provided with the elastic portion; and a pair of protrusions protruding from the groove in the front-rear direction of the cell stack and facing each other in the left-right direction of the cell stack

**In** addition, the pack frame may include a first frame extending along the left-right direction of the cell stack and formed in plurality along the front-rear direction of the cell stack to cover the battery module; and a second frame coupled to the first frame, extending along the front-rear direction of the cell stack, and formed in plurality along the left-right direction of the cell stack to cover the battery module, wherein the hole may be formed in plurality along the left-right direction of the cell stack in the first frame.

**In** addition, the side plate portion may include a first side plate supporting the front, upper, and lower surfaces of the cell stack; and a second side plate connected to the first side plate and supporting the rear surface of the cell stack.

In addition, the side plate portion may include a first support portion supporting the front surface of the cell stack; and a second support portion extending from the first support portion in the front-rear direction of the cell stack and supporting the upper and lower surfaces of the cell stack.

In addition, the battery module may further include a side plate portion supporting the front, rear, upper, and lower surfaces of the cell stack, and the battery module may further include a module fixing portion provided between the side plate portion and the elastic support portion in the front-rear direction of the cell stack and fixing the elastic support portion to the pack frame by pressing the elastic portion in the front-rear direction of the cell stack.

In addition, the elastic support portion may include a support body pressing at least one of the front and rear surfaces of the cell stack; and a plurality of elastic portions formed along the left-right direction of the cell stack in the support body, wherein the module fixing portion may include a pressing portion inserted into the rear side of the elastic portion in a vertical direction through the groove and in contact with the elastic portion in the front-rear direction of the cell stack to press the bent portion in the hole direction; and a side portion formed on both sides of the pressing portion, positioned between the pair of protrusions when the pressing portion is inserted into the rear side of the elastic portion and fixed to the elastic support portion in the left-right direction of the cell stack.

In addition, the battery module may further include a side plate portion supporting the front, rear, upper, and lower surfaces of the cell stack, wherein the buffer unit may be disposed between the side plate portion and the cell stack in the front-rear direction of the cell stack.

In addition, the buffer unit may include a first buffer pad disposed between the first side plate and the front surface of the cell stack in the front-rear direction of the cell stack; and a second buffer pad disposed between the second side plate and the rear surface of the cell stack in the front-rear direction of the cell stack.

A vehicle according to the present disclosure for achieving the above-described object includes a battery pack according to the present disclosure.

### Advantageous Effects

According to an embodiment of the present disclosure, the battery module may be fixed to the battery pack with a simpler structure than in the prior art, and components may be simplified without additional fastening members. In addition, a larger amount of battery cells may be mounted in one battery module.

In addition, according to an embodiment of the present disclosure, components may be simplified by minimizing the number of buffer pads for preventing swelling of battery cells. Also, a larger amount of battery cells may be mounted in one battery module.

In addition, according to an embodiment of the present disclosure, energy density in the battery module may be maximized by mounting a larger amount of battery cells in one battery module than in the prior art.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing the overall shape of a battery pack according to an embodiment of the present disclosure.
FIG. 2 is a view showing the battery module of FIG. 1.
FIG. 3 is an exploded perspective view of the battery module of FIG. 2.
FIGS. 4 and 5 are views showing an elastic support portion of the battery module of FIG. 2.
FIGS. 6 and 7 are views showing a side plate portion of the battery module of FIG. 2.
FIG. 8 is a view showing a module fixing portion of the battery module of FIG. 2.
FIG. 9 is a view showing a state in which the battery module of FIG. 2 is mounted on a pack frame.
FIGS. 10a, 10b, and 10c are side views showing a state in which the elastic support portion is mounted on the pack frame in FIG. 9.
FIG. 11 is a view showing a state in which the module fixing portion of FIG. 8 fixes the battery module to the pack frame.
FIG. 12 is a view showing a state in which the module fixing portion of FIG. 8 fixes the battery module to the pack frame.
FIG. 13 is an enlarged view of portion A of FIG. 12.
FIG. 14 is a side view showing a state in which the module fixing portion fixes the battery module to the pack frame in FIG. 12.
FIG. 15 is a view for describing a state in which the elastic support portion presses the battery module in FIG. 12.
FIGS. 16 to 18 are views showing a battery module and a battery pack including the same according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

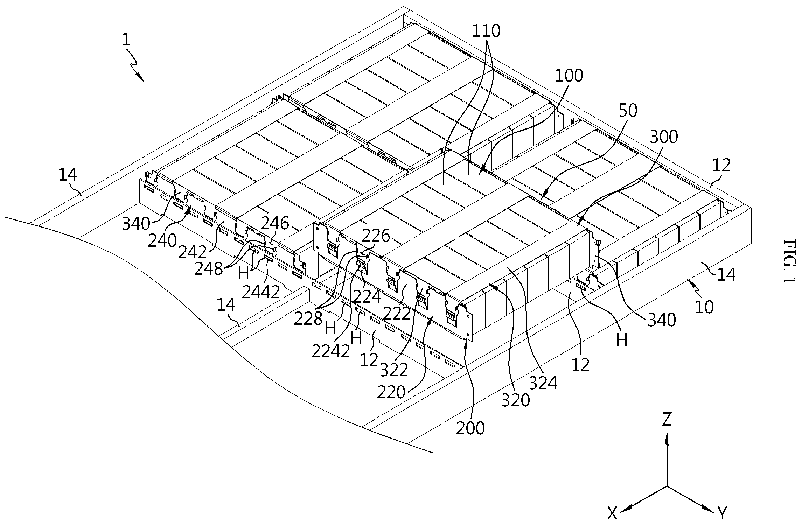

FIG. 1 is a view showing the overall shape of a battery pack 1 according to an embodiment of the present disclosure. At this time, the illustration of the module fixing portion 400 to be described later in FIG. 1 will be omitted.

In an embodiment of the present disclosure, the X-axis direction shown in the drawing may refer to the front-rear direction, the Y-axis direction may refer to the left-right direction perpendicular to the X-axis direction in the horizontal plane (XY plane), and the Z-axis direction may refer to the up-down direction perpendicular to both the X-axis direction and the Y-axis direction.

Referring to FIG. 1, the battery pack 1 may include a pack frame 10 and at least one battery module 50.

The pack frame 10 may accommodate at least one battery module 50 therein. To this end, an accommodation space for accommodating the at least one battery module 50 may be provided in the pack frame 10. The pack frame 10 will be described in more detail in the following related description.

The at least one battery module 50 may include a cell stack 100 and an elastic support portion 200.

The cell stack 100 may include at least one battery cell 110. In an embodiment, the battery cell 110 may be provided as one. Alternatively, a plurality of battery cells 110 may be stacked in the front-rear direction of the pack frame 10.

The at least one battery cell 110 is a secondary battery and may be provided as a pouch-type battery cell, a cylindrical battery cell, or a prismatic battery cell. As an example, the battery cell may be a pouch-type battery cell.

The elastic support portion 200 may be coupled to the pack frame 10 in the front-rear direction of the cell stack 100 to press at least one of the front and rear surfaces of the cell stack 100. Through the elastic support portion 200, a swelling that may occur in the at least one battery module 50 may be effectively suppressed.

In this case, the elastic support portion 200 may be provided only on the front or rear surface of the cell stack 100 to press only one of the front and rear surfaces of the cell stack 100. Alternatively, the elastic support portion 200 may be provided on the front and rear surfaces of the cell stack 100, respectively, to press both the front and rear surfaces of the cell stack 100.

In this embodiment, it will be described that the elastic support portion 200 is exemplarily provided as a pair.

Hereinafter, the elastic support portion 200 will be described in more detail.

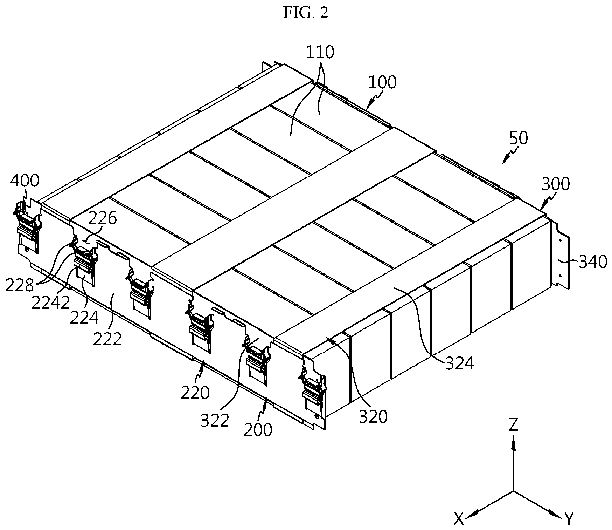

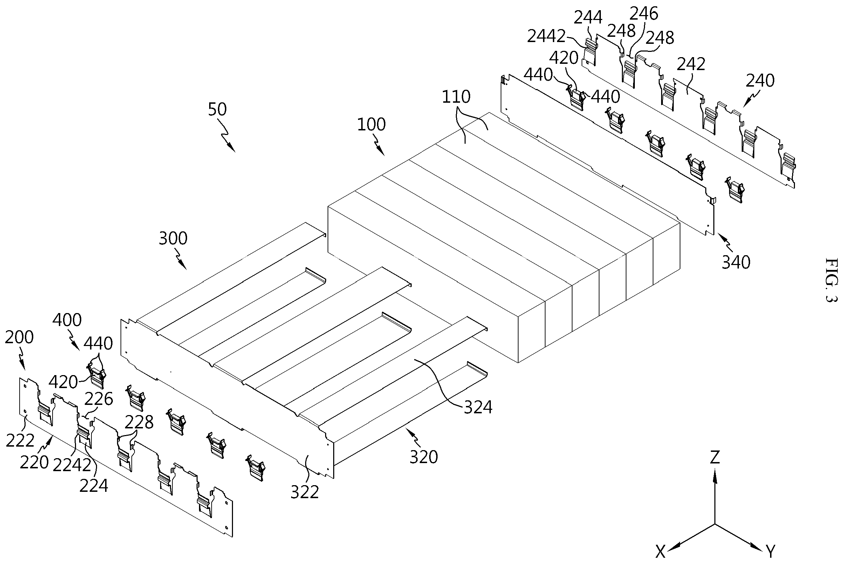

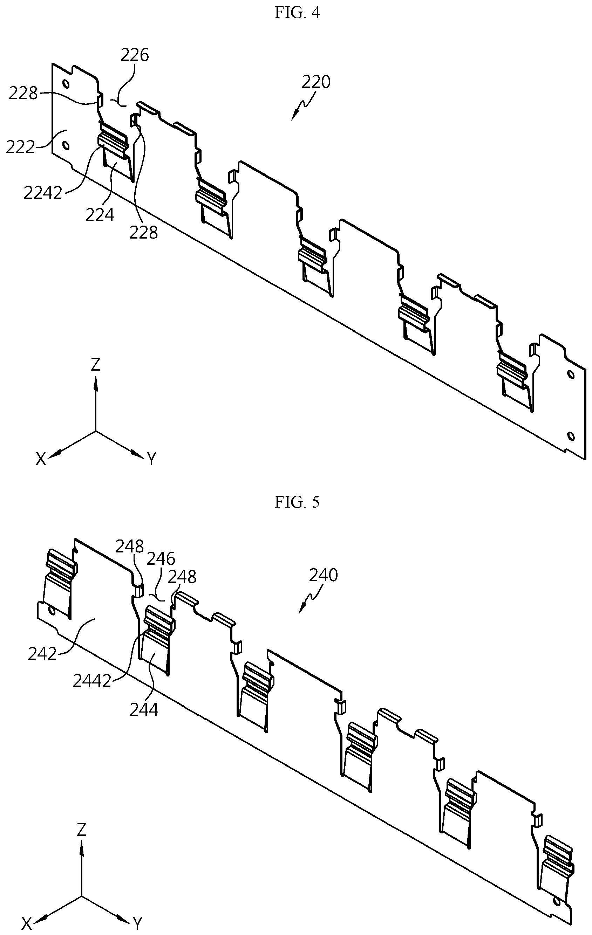

FIG. 2 is a view showing the battery module 50 of FIG. 1, FIG. 3 is an exploded perspective view of the battery module 50 of FIG. 2, and FIGS. 4 and 5 are views showing an elastic support portion 200 of the battery module 50 of FIG. 2. At this time, FIG. 4 is a view showing a first elastic support portion 220 of the elastic support portion 200, and FIG. 5 is a view showing a second elastic support portion 240 of the elastic support portion 200.

Referring to FIGS. 1 to 5, the elastic support portion 200 may include a first elastic support portion 220 and a second elastic support portion 240.

The first elastic support portion 220 may press the front surface of the cell stack 100. At this time, the first elastic support portion 220 may be coupled to the pack frame 10 in the front-rear direction of the cell stack 100 to press the front surface of the cell stack 100.

The first elastic support portion 220 may include a support body 222, a plurality of elastic portions 224, a plurality of grooves 226, and a pair of protrusions 228.

The support body 222 may press the front surface of the cell stack 100. As an example, the support body 222 may be formed in a plate shape extending in the left-right direction of the cell stack 100.

The plurality of elastic portions 224 may be formed along the left-right direction of the cell stack 100 in the support body 222.

The plurality of elastic portions 224 may include a bent portion 2242.

The bent portion 2242 may be coupled to a hole H formed in the pack frame 10 in the front-rear direction of the cell stack 100 in a bent state in the front-rear direction of the cell stack 100. Accordingly, the first elastic support portion 220 and the pack frame 10 may be directly coupled to each other.

As an example, the bent portion 2242 and the hole H may be formed in a shape corresponding to each other to facilitate mutual coupling.

The plurality of grooves 226 may be formed by being recessed in a vertical direction from an upper end of the support body 222. **In** addition, the plurality of grooves 226 may be formed along the left-right direction of the cell stack 100 in the support body 222. Also, the elastic portion 224 may be provided in the plurality of grooves 226.

By such configuration of the groove 226, the module fixing portion 400 to be described later may be easily inserted into the rear side of the elastic portion 224.

The pair of protrusions 228 may protrude from the groove 226 in the front-rear direction of the cell stack 100 and may be formed to face each other in the left-right direction of the cell stack 100. As an example, the pair of protrusions 228 may protrude from the upper side of the groove 226 in the front-rear direction of the cell stack 100.

By such configuration of the pair of protrusions 228 described above, the module fixing portion 400 to be described later may be easily fixed to the first elastic support portion 220.

The second elastic support portion 240 may press the rear surface of the cell stack 100. At this time, the second elastic support portion 240 may be coupled to the pack frame 10 in the front-rear direction of the cell stack 100 to press the rear surface of the cell stack 100.

The second elastic support portion 240 may include a support body 242, a plurality of elastic portions 244, a plurality of grooves 246, and a pair of protrusions 248.

The support body 242 may press the rear surface of the cell stack 100. As an example, the support body 242 may be formed in a plate shape extending in the left-right direction of the cell stack 100.

The plurality of elastic portions 244 may be formed along the left-right direction of the cell stack 100 in the support body 242.

The plurality of elastic portions 244 may include a bent portion 2442.

The bent portion 2442 may be coupled to the hole H formed in the pack frame 10 in the front-rear direction of the cell stack 100 in a state of being bent in the front-rear direction of the cell stack 100. Accordingly, the second elastic support portion 240 and the pack frame 10 may be directly coupled to each other.

As an example, the bent portion 2442 and the hole H may be formed in a shape corresponding to each other to facilitate mutual coupling.

The plurality of grooves 246 may be formed by being recessed from an upper end of the support body 242 in a vertical direction. In addition, the plurality of grooves 246 may be formed along the left-right direction of the cell stack 100 in the support body 242. Also, the elastic portion 244 may be provided in the plurality of grooves 246.

By such configuration of the groove 246, the module fixing portion 400 to be described later may be easily inserted into the rear side of the elastic portion 244.

The pair of protrusions 248 may protrude from the groove 246 in the front-rear direction of the cell stack 100 and may be formed to face each other in the left-right direction of the cell stack 100. As an example, the pair of protrusions 248 may protrude from the upper side of the groove 246 in the front-rear direction of the cell stack 100.

By the configuration of the pair of protrusions 248 described above, the module fixing portion 400 to be described later may be easily fixed to the second elastic support portion 240.

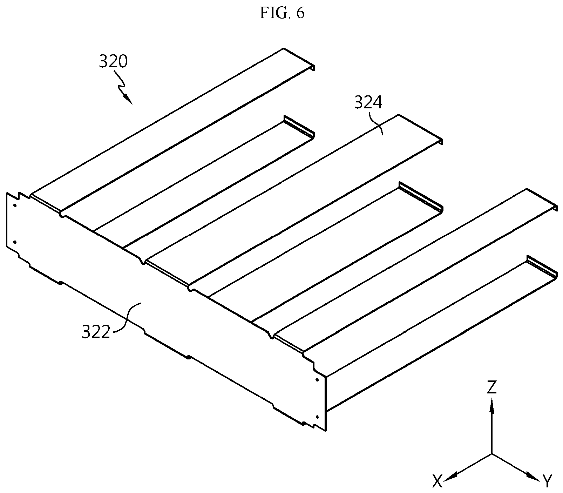

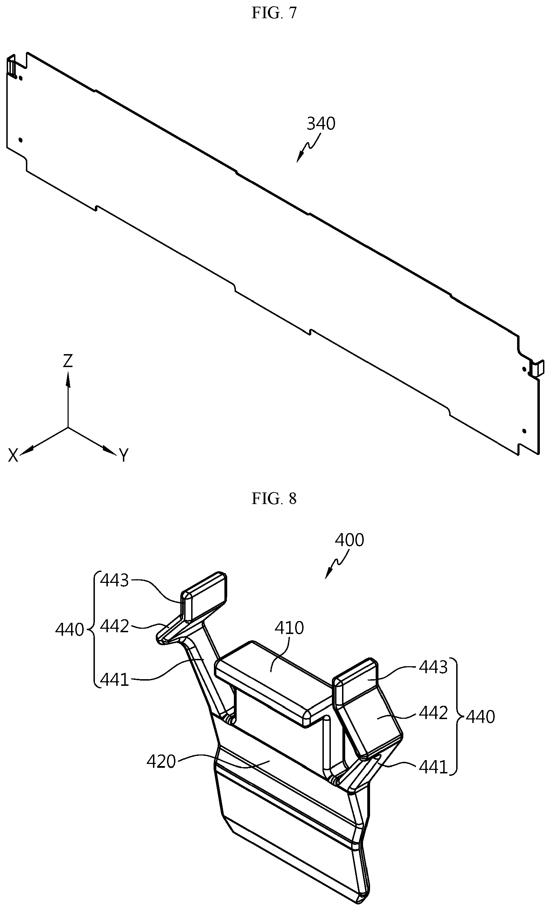

FIGS. 6 and 7 are views showing a side plate portion 300 of the battery module 50 of FIG. 2. At this time, FIG. 6 is a view showing a first side plate 320 of the side plate portion 300, and FIG. 7 is a view showing a second side plate 340 of the side plate portion 300.

Referring to FIGS. 1 to 3, and FIGS. 6 and 7, the battery module 50 may further include a side plate portion 300.

The side plate portion 300 may support the front, rear, upper, and lower surfaces of the cell stack 100. Accordingly, the side plate portion 300 may support the cell stack 100 more stably in the front-rear and top-down directions.

Here, the elastic support portion 200 may be disposed on at least one of the front and rear surfaces of the side plate portion 300. The elastic support portion 200 may guide more stable support for the cell stack 100 of the side plate portion 300 through pressing the cell stack 100 in the front-rear direction.

Hereinafter, the side plate portion 300 will be described in more detail.

The side plate portion 300 may include a first side plate 320 and a second side plate 340.

The first side plate 320 may support the front, upper, and lower surfaces of the cell stack 100.

The first side plate 320 may include a first support portion 322 and a second support portion 324.

The first support portion 322 may support the front surface of the cell stack 100.

The second support portion 324 may extend from the first support portion 322 in the front-rear direction of the cell stack 100. **In** addition, the second support portion 324 may support the upper and lower surfaces of the cell stack 100.

Meanwhile, the above-described first elastic support portion 220 may be disposed on the first support portion 322 (the front surface of the side plate portion 300). The first elastic support portion 220 may guide more stable support for the front surface of the cell stack 100 of the first support portion 322 through pressing the cell stack 100 in the front-rear direction.

The second side plate 340 may be connected to the first side plate 320. **In** addition, the second side plate 340 may support the rear surface of the cell stack 100.

The above-described second elastic support portion 240 may be disposed on the second side plate 340 (the rear surface of the side plate portion 300). The second elastic support portion 240 may guide more stable support for the rear surface of the cell stack 100 of the second side plate 340 through pressing the cell stack 100 in the front-rear direction.

In the drawing for describing an embodiment of the present disclosure, the side plate portion 300 is illustrated as two members, such as a first side plate 320 and a second side plate 340. However, the present disclosure is not limited thereto, and the side plate portion 300 may be integrally formed to support the front, rear, upper, and lower surfaces of the cell stack 100.

FIG. 8 is a view showing a module fixing portion 400 of the battery module 50 of FIG. 2.

Referring to FIGS. 1 to 3 and FIG. 8, the battery module 50 may further include a module fixing portion 400.

The module fixing portion 400 may fix the elastic support portion 200 to the pack frame 10 by pressing the elastic portions 224, 244 in the front-rear direction of the cell stack 100. In this case, the module fixing portion 400 may be provided between the side plate portion 300 and the elastic portions 224, 244 in the front-rear direction of the cell stack 100.

Meanwhile, when the module fixing portion 400 is removed from the battery module 50 in the vertical direction, the battery module 50 may be detached from the pack frame 10 of the battery pack 1.

Hereinafter, the module fixing portion 400 will be described in more detail.

The module fixing portion 400 may include a pressing portion 420 and a side portion 440.

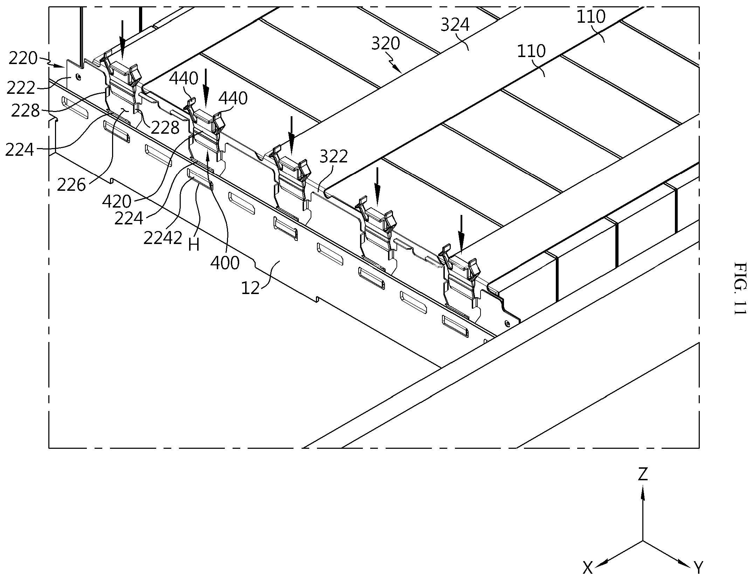

The pressing portion 420 may be inserted into the rear side of the elastic portions 224, 244 in the vertical direction through the above-described grooves 226, 246. Also, the pressing portion 420 may be in contact with the elastic portions 224, 244 in the front-rear direction of the cell stack 100. Accordingly, the pressing portion 420 may press the bent portions 2242, 2442 of the elastic portions 224, 244 in the direction of the hole H (see FIGS. 11 to 14 to be described later). Therefore, the fixing force of the battery module 50 to the battery pack 1 may be additionally secured by the pressing portion 420.

The side portion 440 may be formed on both sides of the pressing portion 420. Also, the side portion 440 may be positioned between the pair of protrusions 228, 248 when the pressing portion 420 is inserted into the rear side of the elastic portions 224, 244. Accordingly, the side portion 440 may be fixed to the elastic support portion 200 in the left-right direction of the cell stack 100 (see FIGS. 11 to 14 to be described later). Therefore, the side portion 440 may prevent the module fixing portion 400 from being separated from the elastic support portion 200.

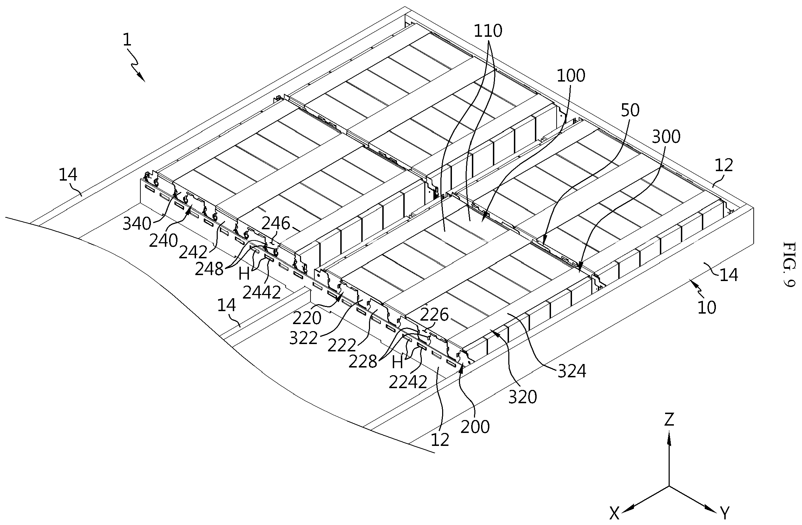

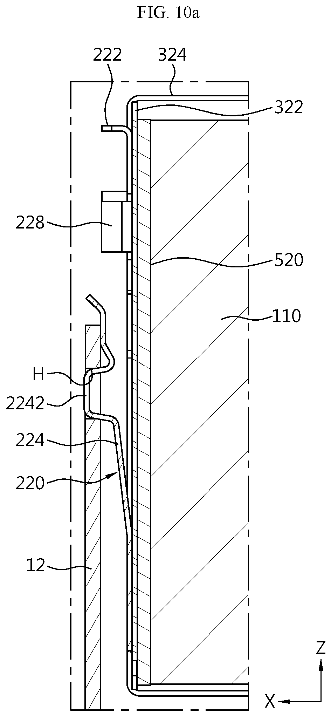

FIG. 9 is a view showing a state in which the battery module 50 of FIG. 2 is mounted on the pack frame 10, and FIG. 10a is a side view showing a state in which the elastic support portion 200 is mounted on the pack frame 10 in FIG. 9. At this time, only the first elastic support portion 220 of the elastic support portion 200 is exemplarily illustrated in FIG. 10a, but the following description may be equally applied to the second elastic support portion 240.

Referring to FIGS. 9 and 10a, the bent portions 2242, 2442 of the elastic support portion 200 is coupled to the hole H formed in the pack frame 10 in the front-rear direction of the cell stack 100.

Accordingly, the battery module 50 may be easily fixed to the battery pack 1 without a separate fastening member (e.g., bolts).

In addition, the fastening space when the battery module 50 is fixed to the battery pack 1 may be minimized, thereby ensuring additional mounting space for the battery cell 110.

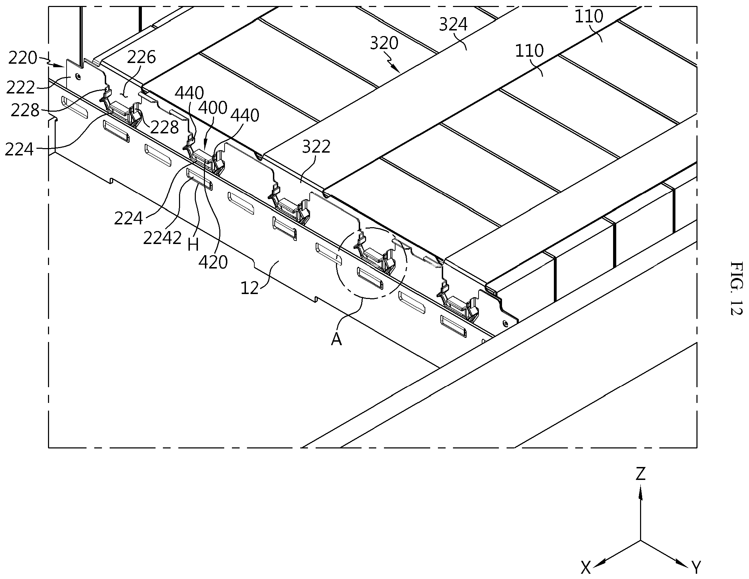

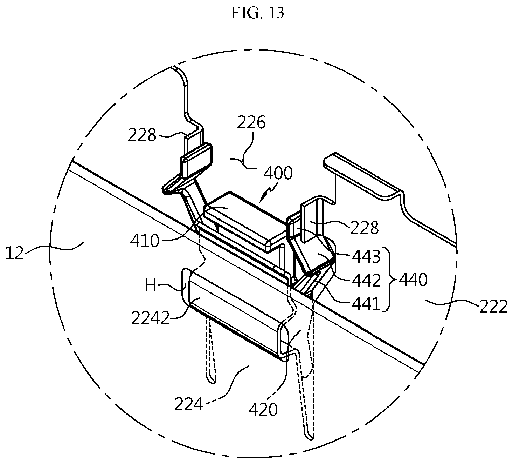

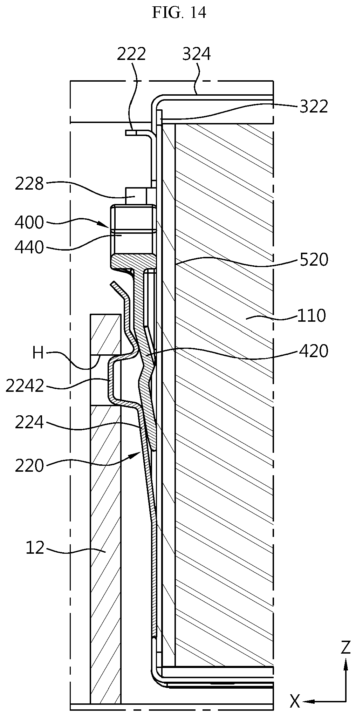

FIG. 11 is a view showing a state in which the module fixing portion 400 of FIG. 8 fixes the battery module 50 to the pack frame 10, FIG. 12 is a view showing a state in which the module fixing portion 400 of FIG. 8 fixes the battery module 50 to the pack frame 10, FIG. 13 is an enlarged view of portion A of FIG. 12, and FIG. 14 is a side view showing a state in which the module fixing portion 400 fixes the battery module 50 to the pack frame 10 in FIG. 12. At this time, only the first elastic support portion 220 of the elastic support portion 200 is exemplarily illustrated in FIG. 14, but the following description may be equally applied to the second elastic support portion 240.

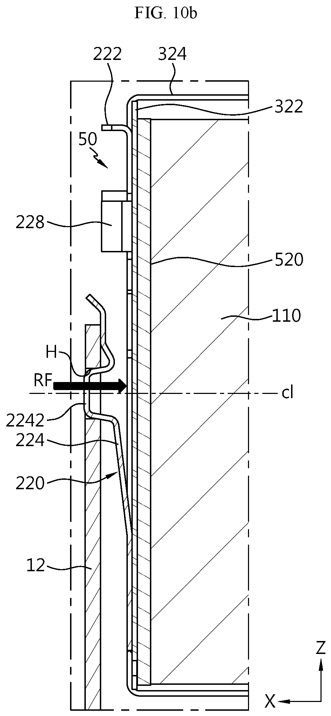

Referring to FIG. 10b, as the battery module 50 is coupled to the first frame 12, the bent portion 2242 may be caught and fastened to the hole H. And, the elastic portion 224 may be maintained in a compressed state. In this case, the elastic portion 224 may provide a restoring force RF in the rear or -X-axis direction. Due to this, the cell stack 100 may be provided with a restoring force RF pushing backward or in the -X-axis direction by the elastic portion 224 of the first elastic support portion 220. Also, the cell stack 100 may be provided with a restoring force RF pushing forward or in the +X-axis direction by the elastic portion 244 of the second elastic support portion 240. At this time, the height of the bent portion 2242 or the hole H may be formed at a height cl corresponding to the middle of the height of the cell stack 100.

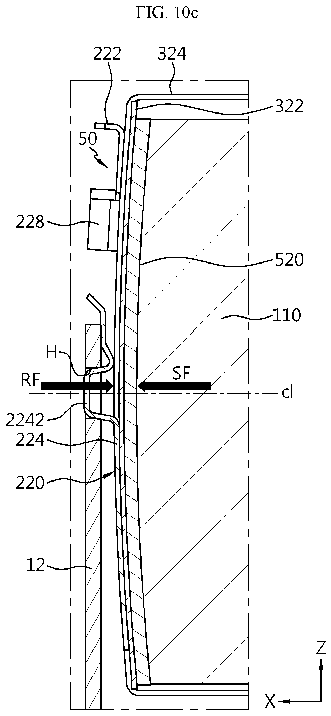

Referring to FIG. 10c, when a swelling occurs in the cell stack 100, the amount of deformation in the front-rear direction, +X-axis direction, or -X-axis direction may be the maximum at the height cl corresponding to the middle of the height of the cell stack 100. At this time, the height of the bent portion 2242 or the hole H is formed at a height cl corresponding to the middle of the height of the cell stack 100, so that the restoring force RF of the elastic portion 224 may be effectively transferred to the cell stack 100. The force SF due to the swelling of the cell stack 100 may act in the opposite direction to the restoring force RF of the elastic portion 224. That is, the restoring force RF of the elastic portion 224 may act in the direction of suppressing the swelling of the cell stack 100.

Meanwhile, the buffer pads 520, 540 included in the buffer unit 500 may be compressed when a swelling occurs in the cell stack 100, thereby providing restoring force to the cell stack 100. Due to this, the buffer pads 520, 540 may suppress the swelling of the cell stack 100.

The battery pack 1 of the present disclosure includes the elastic support portions 220, 240, and thus even if the number of buffer pads 520, 540 is smaller than the number of buffer pads provided in the conventional battery pack, the swelling of the cell stack 100 may be effectively suppressed. The battery pack 1 of the present disclosure may have high energy density by including a small number of buffer pads 520, 540.

Referring to FIGS. 11 to 14, the pressing portion 420 and the elastic portions 224, 244 including the bent portions 2242, 2442 may be formed in a shape corresponding to each other. Accordingly, the pressing portion 420 may easily press the bent portions 2242, 2442 in the direction of the hole H of the pack frame 10 in a state of being inserted into the rear side of the elastic portions 224, 244.

In addition, the side portion 440 may be fixed to the elastic support portion 200 in the left-right direction of the cell stack 100 through the pair of protrusions 228, 248 when the pressing portion 420 is inserted into the rear side of the elastic portions 224, 244.

As an example, the side portions 440 may be formed to face each other in the left-right direction of the cell stack 100 at both sides of the pressing portion 420. In addition, the upper end of the side portion 440 is positioned between the pair of protrusions 228, 248, and thus the side portion 440 may be fixed to the elastic support portion 200 in the left-right direction of the cell stack 100.

The handle portion 410 may extend upwardly from the pressing portion 420 or in the +Z-axis direction. In addition, the handle portion 410 may be positioned between the pair of side portions 440. The handle portion 410 may be configured to be grasped by a user to detach the module fixing portion 400. For example, the handle portion 410 may extend upwardly from the pressing portion 420 and then bend forward.

The side portion 440 may include a first part 441, a second part 442, and a third part 443. The first part 441 may extend obliquely upwardly from the pressing portion 420. The second part 442 may extend obliquely upwardly from the first part 441. The first part 441 and the second part 442 may extend obliquely in different directions and may form uneven portions. The third part 443 may extend vertically upwardly from the second part 442. The first part 441, the second part 442, and the third part 443 may be integrally formed. When the module fixing portion 400 is installed, the uneven portions formed by the second part 442 and the third part 443 and the protrusions 228 may be caught and fastened. The protrusion 228 may be caught in the second part 442. In addition, the protrusion 228 may press the second part 442 downwardly or in the -Z-axis direction. The third part 443 may support the protrusion 228 in the lateral direction.

According to the battery pack 1 of the present disclosure, the module fixing portion 400 may press the elastic portions 224, 244 of the elastic support portion 200 in the front-rear direction of the cell stack 100, thereby additionally ensuring the fixing force of the battery module 50 to the battery pack 1. Accordingly, since the battery module 50 is more stably fixed to the battery pack 1, it is possible to suppress the swelling of the battery module 50 more effectively through the elastic support portion 200.

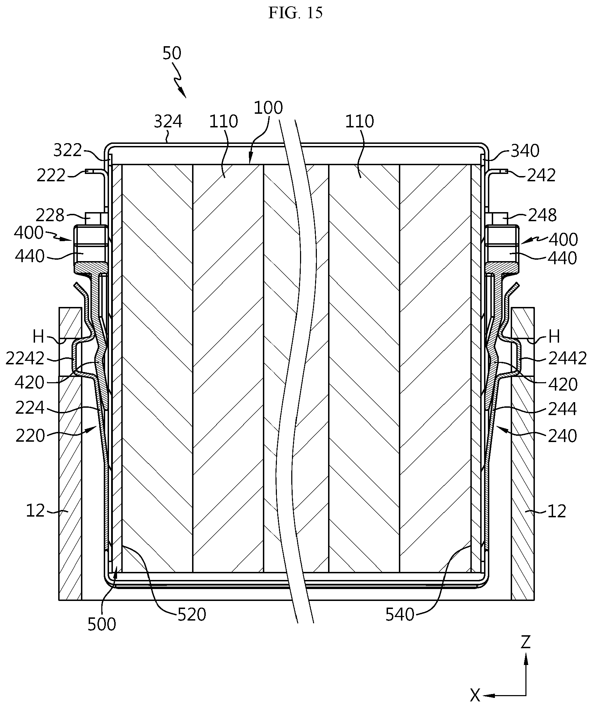

FIG. 15 is a view for describing a state in which the elastic support portion 200 presses the battery module 50 in FIG. 12.

Referring to FIG. 15, the battery module 50 may further include a buffer unit 500.

The buffer unit 500 may shrink the cell stack 100 according to pressure applied to at least one of the front and rear surfaces of the cell stack 100 by the elastic support portion 200 described above. As an example, the buffer unit 500 may be formed of a material having elasticity, such as a sponge or the like, to enable the shrinkage of the cell stack 100.

The buffer unit 500 may be disposed between the side plate portion 300 and the cell stack 100 in the front-rear direction of the cell stack 100. Specifically, the buffer unit 500 may be disposed between the front surface of the side plate portion 300 and the front surface of the cell stack 100. In addition, the buffer unit 500 may be provided between the rear surface of the side plate portion 300 and the rear surface of the cell stack 100.

The buffer unit 500 may include a first buffer pad 520 and a second buffer pad 540.

The first buffer pad 520 may be disposed between the above-described first side plate 320 (specifically, the first support portion 322) and the front surface of the cell stack 100 in the front-rear direction of the cell stack 100. In this case, the first buffer pad 520 may shrink the front surface of the cell stack 100.

The second buffer pad 540 may be disposed between the above-described second side plate 340 and the rear surface of the cell stack 100 in the front-rear direction of the cell stack 100. In this case, the second buffer pad 540 may shrink the rear surface of the cell stack 100.

In the battery pack 1 of the present disclosure, the battery module 50 may be fixed to the pack frame 10 by the elastic support portion 200. In this state, the elastic support portion 200 may press at least one of the front and rear surfaces of the cell stack 100. Through the elastic support portion 200, the swelling that may occur in the battery module 50 may be effectively suppressed.

Accordingly, it is possible to promote component simplification by minimizing the number of buffer pads for preventing the swelling of the battery cell 110 (e.g., provided between the front surface of the side plate portion 300 and the front surface of the cell stack 100 and between the rear surface of the side plate portion 300 and the rear surface of the cell stack 100).

The pack frame 10 described above may be a frame having a substantially rectangular column shape in overall shape.

Referring to FIGS. 1, 9, and 11 again, the pack frame 10 may include a first frame 12 and a second frame 14.

The first frame 12 may cover the battery module 50. As an example, the first frame 12 may cover the front or rear surface of the battery module 50. In this case, the first frame 12 may extend along the left-right direction of the cell stack 100 and may be formed in plurality along the front-rear direction of the cell stack 100. Meanwhile, a plurality of the above-described holes H may be formed along the left-right direction of the cell stack 100 in the first frame 12.

The second frame 14 may be coupled to the first frame 12 and may cover the battery module 50. As an example, the second frame 14 may cover one side surface or the other side surface of the battery module 50. In this case, the second frame 14 may extend along the front-rear direction of the cell stack 100 and may be formed in plurality along the left-right direction of the cell stack 100.

In an embodiment, some of the first frames 12 may constitute one side surface and the other side surface of the battery pack 1 in the front-rear direction. In addition, some of the second frames 14 may constitute one side surface and the other side surface of the battery pack 1 in the left-right direction.

According to the present disclosure, the elastic support portion 200 is coupled to the hole H provided in the pack frame 10, and thus the battery module 50 may be fixed to the battery pack 1 without a separate fastening member.

Meanwhile, the different battery modules 50 provided inside the pack frame 10 may be disposed so that the front surfaces (first support portion 322) of each side plate portion 300 face different directions, as shown in FIG. 9. Alternatively, although not shown, the different battery modules 50 may be disposed so that the front surfaces of each side plate portion 300 face the same direction.

In addition, the battery pack 1 may further include separate upper and lower covers (not shown) covering the upper and lower portions of the at least one battery module 50.

As described above, according to an embodiment of the present disclosure, the battery module 50 may be fixed to the battery pack 1 with a simpler structure than the prior art, and it is possible to promote component simplification without additional fastening members. Also, a larger amount of battery cells 110 may be mounted in one battery module 50.

In addition, according to an embodiment of the present disclosure, it is possible to promote component simplification by minimizing the number of buffer pads for preventing the swelling of the battery cell 110. Also, a larger amount of battery cells 110 may be mounted in one battery module 50.

In addition, according to an embodiment of the present disclosure, energy density in the battery module 50 may be maximized by mounting a larger amount of battery cells 110 in one battery module 50 than in the prior art.

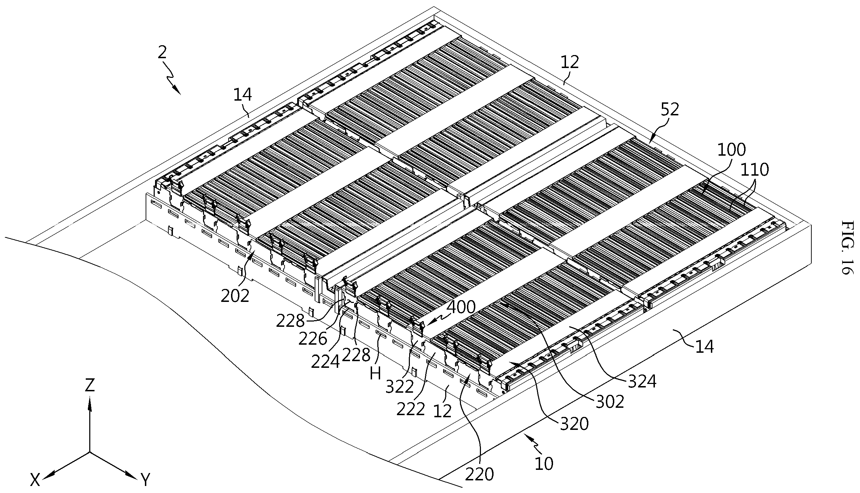

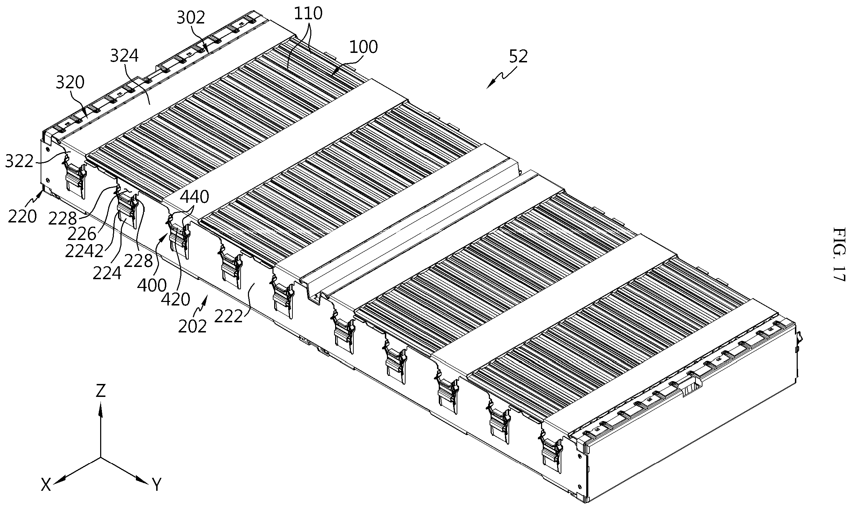

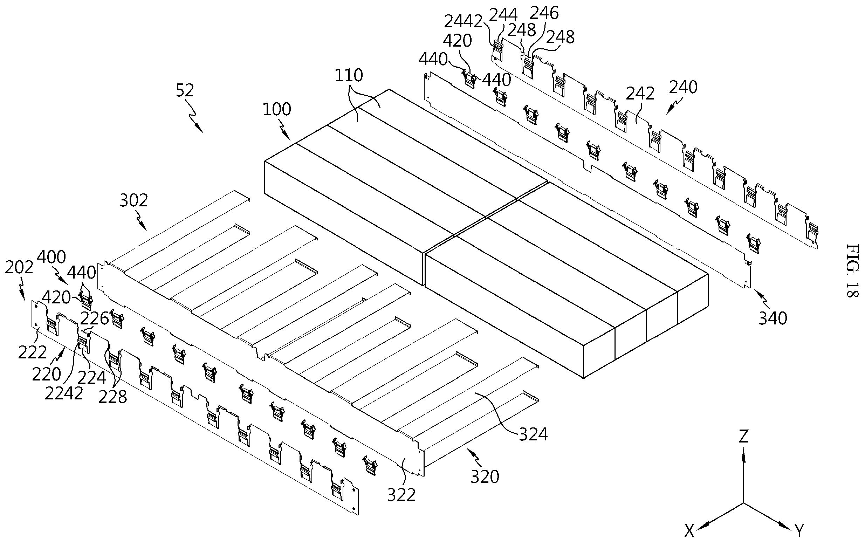

FIGS. 16 to 18 are views showing a battery module 52 and a battery pack 2 including the same according to another embodiment of the present disclosure.

Since the battery module 52 and the battery pack 2 according to this embodiment are similar to the battery module 50 and the battery pack 1 of the previous embodiment, a redundant description of configurations that are substantially the same as or similar to the previous embodiment will be omitted, and hereinafter, differences from the previous embodiment will be mainly described.

Referring to FIGS. 16 to 18, the battery pack 2 may include a pack frame 10 and at least one battery module 52. In this case, the cell stack 100 may be provided as a pair in one battery module 52. As an example, the cell stack 100 may be disposed side by side in a pair in the left-right direction of the pack frame 10.

The pack frame 10 may accommodate the at least one battery module 52 therein.

The at least one battery module 52 may include an elastic support portion 202 and a side plate portion 302.

The elastic support portion 202 may be coupled to the pack frame 10 in the front-rear direction of the cell stack 100 to press at least one of the front and rear surfaces of the entire pair of cell stacks 100. As an example, the elastic support portion 202 may extend further in the left-right direction of the cell stack 100 compared to the embodiment shown in FIGS. 1 to 15 in order to press at least one of the front and rear surfaces of the entire pair of cell stacks 100.

The side plate portion 302 may support the front, rear, upper, and lower surfaces of the entire pair of cell stacks 100. As an example, the side plate portion 302 may extend further in the left-right direction of the cell stack 100 compared to the embodiment shown in FIGS. 1 to 15 in order to support the front, rear, upper, and lower surfaces of the entire pair of cell stacks 100.

Meanwhile, in addition to the pack frame 10 and the battery modules 50, 52, the battery packs 1, 2 according to the present disclosure may further include various devices for controlling the charge/discharge of the battery modules 50, 52, such as a battery management system (BMS), a current sensor, a fuse, and the like.

In addition, the battery packs 1, 2 according to the present disclosure may be applied to a vehicle such as an electric vehicle. That is, the vehicle according to the present disclosure may include the battery packs 1, 2 according to the present disclosure.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, right, front, and rear are used for convenience of description only, and it is obvious to those skilled in the art that the term may change depending on the position of the stated element or an observer.

## Claims

1. A battery pack (1) comprising:
a pack frame (10); and
at least one battery module (50) provided inside the pack frame (10) and comprising a cell stack (100) and an elastic support portion (200) coupled to the pack frame (10) in the front-rear direction of the cell stack (100) to press at least one of the front and rear surfaces of the cell stack (100),
wherein the elastic support portion (200) comprises:
a support body (222, 242) pressing at least one of the front and rear surfaces of the cell stack (100); and
a plurality of elastic portions (224, 244) formed along the left-right direction of the cell stack (100) in the support body (222, 242),
wherein the plurality of elastic portions (224, 244) comprise a bent portion (2242, 2442) coupled to a hole (H) formed in the pack frame (10) in the front-rear direction of the cell stack (100).

2. The battery pack according to claim 1,
wherein the battery module (50) further comprises a side plate portion (300) supporting the front, rear, upper, and lower surfaces of the cell stack (100),
wherein the elastic support portion (200) is disposed on at least one of the front and rear surfaces of the side plate portion (300).

3. The battery pack according to claim 1,
wherein the battery module (50) further comprises a module fixing portion (400) fastened to the elastic support portion (200) and pressing the elastic support portion (200) in the front-rear direction of the cell stack (100) to fix the elastic support portion (200) to the pack frame (10).

4. The battery pack according to claim 1,
wherein the battery module (50) further comprises a buffer unit (500) disposed on at least one of the front and rear surfaces of the cell stack (50).

5. The battery pack according to claim 1,
wherein the bent portion (2242, 2442) of the elastic portion (224, 244) is coupled to the hole (H) formed in the pack frame (10) in the front-rear direction of the cell stack (100) in a state of being bent in the front-rear direction of the cell stack (100).

6. The battery pack according to claim 1,
wherein the elastic support portion (200) further comprises:
a groove (226, 246) formed by being recessed from an upper end of the support body (222, 242) in a vertical direction, formed along the left-right direction of the cell stack (100) in the support body (222, 242), and provided with the elastic portion (224, 244); and
a pair of protrusions (228, 248) protruding from the groove in the front-rear direction of the cell stack (100) and facing each other in the left-right direction of the cell stack (100).

7. The battery pack according to claim 1,
wherein the pack frame (10) comprises:
a first frame (12) extending along the left-right direction of the cell stack (100) and formed in plurality along the front-rear direction of the cell stack (100) to cover the battery module (50); and
a second frame (14) coupled to the first frame (12), extending along the front-rear direction of the cell stack (100), and formed in plurality along the left-right direction of the cell stack (100) to cover the battery module (50),
wherein the hole (H) is formed in plurality along the left-right direction of the cell stack (100) in the first frame (12).

8. The battery pack according to claim 2,
wherein the side plate portion (300) comprises:
a first side plate (320) supporting the front, upper, and lower surfaces of the cell stack (100); and
a second side plate (340) connected to the first side plate (320) and supporting the rear surface of the cell stack (100).

9. The battery pack according to claim 2,
wherein the side plate portion (300) comprises:
a first support portion (322) supporting the front surface of the cell stack (100); and
a second support portion (324) extending from the first support portion (322) in the front-rear direction of the cell stack (100) and supporting the upper and lower surfaces of the cell stack (100).

10. The battery pack according to claim 3,
wherein the battery module (50) further comprises:
a side plate portion (300) supporting the front, rear, upper, and lower surfaces of the cell stack (100), and
a module fixing portion (400) provided between the side plate portion (300) and the elastic support portion (200) in the front-rear direction of the cell stack (100) and fixing the elastic support portion (200) to the pack frame (10) by pressing the elastic portion (224, 244) in the front-rear direction of the cell stack (100).

11. The battery pack according to claim 3, wherein the module fixing portion (400) comprises:
a pressing portion (420) inserted into the rear side of the elastic portion (224, 244) in a vertical direction through the groove (226, 246) and in contact with the elastic portion (224, 244) in the front-rear direction of the cell stack (100) to press the bent portion (2242, 2442) in the hole direction; and
a side portion (440) formed on both sides of the pressing portion (420), positioned between the pair of protrusions (228, 248) when the pressing portion (420) is inserted into the rear side of the elastic portion (224, 244) and fixed to the elastic support portion (200) in the left-right direction of the cell stack (100).

12. The battery pack according to claim 4,
wherein the battery module (50) further comprises a side plate portion (300) supporting the front, rear, upper, and lower surfaces of the cell stack (100),
wherein the buffer unit (500) is disposed between the side plate portion (300) and the cell stack (100) in the front-rear direction of the cell stack (100).

13. The battery pack according to claim 12,
wherein the buffer unit (500) comprises:
a first buffer pad (520) disposed between the first side plate (320) and the front surface of the cell stack (100) in the front-rear direction of the cell stack (100); and
a second buffer pad (540) disposed between the second side plate (320) and the rear surface of the cell stack (100) in the front-rear direction of the cell stack (100).

14. A vehicle comprising a battery pack (1) according to any one of claims 1 to 13.

## Patentansprüche

1. Batteriepack (1) aufweisend:
einen Packrahmen (10); und
mindestens ein Batteriemodul (50), das innerhalb des Packrahmens (10) vorgesehen ist und einen Zellenstapel (100) und einen elastischen Stützabschnitt (200) aufweist, der mit dem Packrahmen (10) in der Vorwärts-Rückwärts-Richtung des Zellenstapels (100) gekoppelt ist, um mindestens eine der Vorder- und Rückflächen des Zellenstapels (100) zu drücken,
wobei der elastische Stützabschnitt (200) aufweist:
einen Stützkörper (222, 242), der mindestens eine der Vorder- und der Rückfläche des Zellenstapels (100) drückt; und
mehrere elastische Abschnitte (224, 244), die entlang der Links-Rechts-Richtung des Zellenstapels (100) in dem Stützkörper (222, 242) ausgebildet sind,
wobei die mehreren elastischen Abschnitte (224, 244) einen gebogenen Abschnitt (2242, 2442) aufweisen, der mit einem Loch (H) gekoppelt ist, das in dem Packrahmen (10) in der Vorwärts-Rückwärts-Richtung des Zellenstapels (100) ausgebildet ist.

2. Batteriepack nach Anspruch 1,
wobei das Batteriemodul (50) ferner einen Seitenplattenabschnitt (300) aufweist, der die Vorder-, Rück-, Ober- und Unterseite des Zellenstapels (100) stützt,
wobei der elastische Stützabschnitt (200) auf mindestens einer der Vorderfläche und der Rückfläche des Seitenplattenabschnitts (300) angeordnet ist.

3. Batteriepack nach Anspruch 1,
wobei das Batteriemodul (50) ferner einen Modulbefestigungsabschnitt (400) aufweist, der an dem elastischen Stützabschnitt (200) befestigt ist und den elastischen Stützabschnitt (200) in der Vorwärts-Rückwärts-Richtung des Zellenstapels (100) drückt, um den elastischen Stützabschnitt (200) an dem Packrahmen (10) zu befestigen.

4. Batteriepack nach Anspruch 1,
wobei das Batteriemodul (50) ferner eine Puffereinheit (500) aufweist, die auf mindestens einer der Vorder- und der Rückfläche des Zellenstapels (50) angeordnet ist.

5. Batteriepack nach Anspruch 1,
wobei der gebogene Abschnitt (2242, 2442) des elastischen Abschnitts (224, 244) mit dem Loch (H) gekoppelt ist, das in dem Packrahmen (10) in der Vorwärts-Rückwärts-Richtung des Zellenstapels (100) in einem Zustand ausgebildet ist, in dem er in der Vorwärts-Rückwärts-Richtung des Zellenstapels (100) gebogen ist.

6. Batteriepack nach Anspruch 1,
wobei der elastische Stützabschnitt (200) ferner aufweist:
eine Nut (226, 246), die ausgebildet ist, indem sie von einem oberen Ende des Stützkörpers (222, 242) in einer vertikalen Richtung ausgespart ist, die entlang der Links-Rechts-Richtung des Zellenstapels (100) in dem Stützkörper (222, 242) ausgebildet ist und mit dem elastischen Abschnitt (224, 244) versehen ist; und
ein Paar Vorsprünge (228, 248), die von der Nut in der Vorwärts-Rückwärts-Richtung des Zellenstapels (100) vorstehen und einander in der Links-Rechts-Richtung des Zellenstapels (100) zugewandt sind.

7. Batteriepack nach Anspruch 1,
wobei der Packrahmen (10) aufweist:
einen ersten Rahmen (12), der sich entlang der Links-Rechts-Richtung des Zellenstapels (100) erstreckt und in mehreren entlang der Vorwärts-Rückwärts-Richtung des Zellenstapels (100) ausgebildet ist, um das Batteriemodul (50) abzudecken; und
einen zweiten Rahmen (14), der mit dem ersten Rahmen (12) gekoppelt ist, sich entlang der Vorwärts-Rückwärts-Richtung des Zellenstapels (100) erstreckt und in mehreren entlang der Links-Rechts-Richtung des Zellenstapels (100) ausgebildet ist, um das Batteriemodul (50) abzudecken,
wobei das Loch (H) in mehreren entlang der Links-Rechts-Richtung des Zellenstapels (100) in dem ersten Rahmen (12) ausgebildet ist.

8. Batteriepack nach Anspruch 2,
wobei der Seitenplattenabschnitt (300) aufweist:
eine erste Seitenplatte (320), die die Vorder-, Ober- und Unterseite des Zellenstapels (100) stützt; und
eine zweite Seitenplatte (340), die mit der ersten Seitenplatte (320) verbunden ist und die Rückfläche des Zellenstapels (100) stützt.

9. Batteriepack nach Anspruch 2,
wobei der Seitenplattenabschnitt (300) aufweist:
einen ersten Stützabschnitt (322), der die Vorderfläche des Zellenstapels (100) stützt; und
einen zweiten Stützabschnitt (324), der sich von dem ersten Stützabschnitt (322) in der Vorwärts-Rückwärts-Richtung des Zellenstapels (100) erstreckt und die Ober- und Unterseite des Zellenstapels (100) stützt.

10. Batteriepack nach Anspruch 3,
wobei das Batteriemodul (50) ferner aufweist:
einen Seitenplattenabschnitt (300), der die Vorder-, Rück-, Ober- und Unterseite des Zellenstapels (100) stützt, und
einen Modulbefestigungsabschnitt (400), der zwischen dem Seitenplattenabschnitt (300) und dem elastischen Stützabschnitt (200) in der Vorwärts-Rückwärts-Richtung des Zellenstapels (100) vorgesehen ist und den elastischen Stützabschnitt (200) an dem Packrahmen (10) durch Drücken des elastischen Abschnitts (224, 244) in der Vorwärts-Rückwärts-Richtung des Zellenstapels (100) befestigt.

11. Batteriepack nach Anspruch 3,
wobei der Modulbefestigungsabschnitt (400) aufweist:
einen Drückabschnitt (420), der in die Rückseite des elastischen Abschnitts (224, 244) in einer vertikalen Richtung durch die Nut (226, 246) und in Kontakt mit dem elastischen Abschnitt (224, 244) in der Vorwärts-Rückwärts-Richtung des Zellenstapels (100) eingesetzt ist, um den gebogenen Abschnitt (2242, 2442) in der Lochrichtung zu drücken; und
einen Seitenabschnitt (440), der auf beiden Seiten des Drückabschnitts (420) ausgebildet ist, zwischen dem Paar Vorsprünge (228, 248) positioniert ist, wenn der Drückabschnitt (420) in die Rückseite des elastischen Abschnitts (224, 244) eingesetzt ist, und an dem elastischen Stützabschnitt (200) in der Links-Rechts-Richtung des Zellenstapels (100) befestigt ist.

12. Batteriepack nach Anspruch 4,
wobei das Batteriemodul (50) ferner einen Seitenplattenabschnitt (300) aufweist, der die Vorder-, Rück-, Ober- und Unterseite des Zellenstapels (100) stützt,
wobei die Puffereinheit (500) zwischen dem Seitenplattenabschnitt (300) und dem Zellenstapel (100) in der Vorwärts-Rückwärts-Richtung des Zellenstapels (100) angeordnet ist.

13. Batteriepack nach Anspruch 12,
wobei die Puffereinheit (500) aufweist:
ein erstes Pufferpad (520), das zwischen der ersten Seitenplatte (320) und der Vorderfläche des Zellenstapels (100) in der Vorwärts-Rückwärts-Richtung des Zellenstapels (100) angeordnet ist; und
ein zweites Pufferpad (540), das zwischen der zweiten Seitenplatte (320) und der Rückfläche des Zellenstapels (100) in der Vorwärts-Rückwärts-Richtung des Zellenstapels (100) angeordnet ist.

14. Fahrzeug aufweisend ein Batteriepack (1) nach einem der Ansprüche 1 bis 13.

## Revendications

1. Bloc-batterie (1), comprenant :
un bâti de bloc (10) ; et
au moins un module de batterie (50) agencé à l'intérieur du bâti de bloc (10), et comprenant un empilement de cellules (100) et une partie de support élastique (200) couplés au bâti de bloc (10) dans le sens avant-arrière de l'empilement de cellules (100) pour faire pression sur au moins une des surfaces antérieure et postérieure de l'empilement de cellules (100),
la partie de support élastique (200) comprenant :
un corps de support (222, 242) appuyant sur au moins une des surfaces antérieure et postérieure de l'empilement de cellules (100) ; et
une pluralité de parties élastiques (224, 244) formées le long du sens gauche-droite de l'empilement de cellules (100) dans le corps de support (222, 242),
la pluralité de parties élastiques (224, 244) comprenant une partie courbée (2242, 2442), couplée à un orifice (H) formé dans le bâti de bloc (10) dans le sens avant-arrière de l'empilement de cellules (100).

2. Bloc-batterie selon la revendication 1,
le module de batterie (50) comprenant en outre une partie de plaque latérale (300) supportant les surfaces antérieure, postérieure, supérieure et inférieure de l'empilement de cellules (100),
la partie de support élastique (200) étant disposée sur au moins une des surfaces antérieure et postérieure de la partie de plaque latérale (300).

3. Bloc-batterie selon la revendication 1,
le module de batterie (50) comprenant en outre une partie de fixation du module (400) fixé sur la partie de support élastique (200), et appuyant sur la partie de support élastique (200) dans le sens avant-arrière de l'empilement de cellules (100) pour fixer la partie de support élastique (200) au bâti de bloc (10).

4. Bloc-batterie selon la revendication 1,
le module de batterie (50) comprenant en outre un dispositif tampon (500) disposé sur au moins une des surfaces antérieure et postérieure de l'empilement de cellules (50).

5. Bloc-batterie selon la revendication 1,
la partie courbée (2242, 2442) de la partie élastique (224, 244) étant couplée à l'orifice (H) formé dans le bâti de bloc (10) dans le sens avant-arrière de l'empilement de cellules (100) dans un état plié dans le sens avant-arrière de l'empilement de cellules (100).

6. Bloc-batterie selon la revendication 1,
la partie de support élastique (200) comprenant en outre :
une cannelure (226, 246) formée par un évidement depuis une extrémité supérieure du corps de support (222, 242) dans une direction verticale, formée le long du sens avant-arrière de l'empilement de cellules (100) dans le corps de support (222, 242), et agencée avec la partie élastique (224, 244) ; et
une paire de saillies (228, 248) dépassant de la cannelure dans le sens avant-arrière de l'empilement de cellules (100), et se faisant face dans le sens gauche-droite de l'empilement de cellules (100).

7. Bloc-batterie selon la revendication 1,
le bâti de bloc (10) comprenant :
un premier bâti (12) disposé dans le sens gauche-droite de l'empilement de cellules (100), et formé en pluralité le long du sens avant-arrière de l'empilement de cellules (100) pour couvrir le module de batterie (50) ; et
un deuxième bâti (14) couplé au premier bâti (12), disposé dans le sens avant-arrière de l'empilement de cellules (100), et formé en pluralité dans le sens gauche-droite de l'empilement de cellules (100) pour couvrir le module de batterie (50),
l'orifice (H) étant formé en pluralité dans le sens gauche-droite de l'empilement de cellules (100) dans le premier bâti (12).

8. Bloc-batterie selon la revendication 2,
la partie de plaque latérale (300) comprenant :
une première plaque latérale (320) supportant les surfaces antérieure, supérieure et inférieure de l'empilement de cellules (100) ; et
une deuxième plaque latérale (340) connectée à la première plaque latérale (320), et supportant la surface postérieure de l'empilement de cellules (100).

9. Bloc-batterie selon la revendication 2,
la partie de plaque latérale (300) comprenant :
une première partie de support (322) supportant la surface antérieure de l'empilement de cellules (100) ; et
une deuxième partie de support (324) s'étendant depuis la première partie de support (322) dans le sens avant-arrière de l'empilement de cellules (100), et supportant les surfaces supérieure et inférieure de l'empilement de cellules (100).

10. Bloc-batterie selon la revendication 3,
le module de batterie (50) comprenant en outre :
une partie de plaque latérale (300) supportant les surfaces antérieure, postérieure, supérieure et inférieure de l'empilement de cellules (100), et
une partie de fixation du module (400) agencée entre la partie de plaque latérale (300) et la partie de support élastique (200) dans le sens avant-arrière de l'empilement de cellules (100), et fixant la partie de support élastique (200) au bâti de bloc (10) en appuyant sur la partie élastique (224, 244) dans le sens avant-arrière de l'empilement de cellules (100).

11. Bloc-batterie selon la revendication 3,
la partie de fixation du module (400) comprenant :
une partie de pression (420) insérée dans le côté postérieur de la partie élastique (224, 244) dans une direction verticale à travers la cannelure (226, 246), et au contact de la partie élastique (224, 244) dans le sens avant-arrière de l'empilement de cellules (100) pour appuyer la partie courbée (2242, 2442) dans le sens de l'orifice ; et
une partie latérale (440) formée des deux côtés de la partie de pression (420), positionnée entre la paire de saillies (228, 248) lorsque la partie de pression (420) est insérée dans le côté postérieur de la partie élastique (224, 244), et fixée sur la partie de support élastique (200) dans le sens gauche-droite de l'empilement de cellules (100).

12. Bloc-batterie selon la revendication 4,
le module de batterie (50) comprenant en outre une partie de plaque latérale (300) supportant les surfaces antérieure, postérieure, supérieure et inférieure de l'empilement de cellules (100),
le dispositif tampon (500) étant disposé entre la partie de plaque latérale (300) et l'empilement de cellules (100) dans le sens avant-arrière de l'empilement de cellules (100).

13. Bloc-batterie selon la revendication 12,
le dispositif tampon (500) comprenant :
un premier patin tampon (520) disposé entre la première plaque latérale (320) et la surface antérieure de l'empilement de cellules (100) dans le sens avant-arrière de l'empilement de cellules (100) ; et
un deuxième patin tampon (540) disposé entre la deuxième plaque latérale (320) et la surface postérieure de l'empilement de cellules (100) dans le sens avant-arrière de l'empilement de cellules 100).

14. Véhicule comprenant un bloc-batterie (1) selon une quelconque des revendications 1 à 13.
